# EUROPÄISCHE PATENTSCHRIFT

(11) **EP 1 818 748 B1**
(45) Veröffentlichungstag und Bekanntmachung des Hinweises auf die Patenterteilung: **14.05.2014**
(21) Anmeldenummer: 07001148.1
(22) Anmeldetag: 19.01.2007
(51) Int. Cl.: G01M 17/007, G05D 1/02

(54) **Vorrichtung für die Prüfung und Einstellung von Fahrerassistenzsystemen von Kraftfahrzeugen am Bandende**
Device for the testing and setting of driver assistance systems of motor vehicles on the band end
Dispositif de test et de réglage d'un système d'assistance au pilotage de véhicules à moteur en bout de bande

(30) Priorität: 08.02.2006 DE 102006006023
(43) Veröffentlichungstag der Anmeldung: 15.08.2007
(73) Patentinhaber: Dürr Assembly Products GmbH, 66346 Püttlingen (DE)
(72) Erfinder: Schenk, Jan, 66346 Püttlingen (DE); Tentrup, Thomas Dr., 66663 Merzig-Mechern (DE)
(74) Vertreter: Vièl, Christof

(56) Entgegenhaltungen:
- EP-A- 1 596 179
- DE-A1-102004 023 730
- DE-B3- 10 313 463
- US-A1- 2001 008 446
- US-A1- 2005 222 746
- US-B1- 6 363 619

## Beschreibung

Die Erfindung betrifft eine Vorrichtung für die Prüfung und Einstellung von Fahrerassistenzsystemen von Kraftfahrzeugen am Bandende.

Fahrerassistenzsysteme (FAS), welche in der Regel auf Basis von Infrarot- oder Radarsensorik, sowie von Kameras arbeiten, erfreuen sich zunehmender Beliebtheit. Fahrerassistenzsysteme können beispielsweise Nachtsichtsysteme, Abstandshaltesysteme, Einparkassistenten oder Überholassistenten sein. Solche Systeme müssen hochgenau (max. +/- 0,25 °) auf die "tatsächliche Fahrtrichtung" ausgerichtet werden (Azimut), da es ansonsten zu mitunter gefährlichen Fehlfunktionen kommen kann.

Ein Beispiel für ein solches Fahrerassistenzsystem stellen radarbasierte, autonome Abstandshaltesysteme (Adaptive Cruise Control - ACC) mit einer Reichweite von bis 150 m vor dem Fahrzeug dar. Ein solches ACC-System hat die Aufgabe, das Fahrzeugvorfeld zu beobachten und den Abstand zu einem vorausfahrenden Fahrzeug unter bestimmten Bedingungen auf einem eingestellten Wert zu halten. Das System greift dazu in das Motormanagement und sogar in gewissem Maße und unter bestimmten Voraussetzungen in die Bremsensteuerung des eigenen Fahrzeuges ein. Bei einem derartigen Abstandshaltesystem liegt bei einem Verbaufehler von 2° bei einem um 130 m entfernten Detektionsziel eine Fehlortung um 4,54 m vor (130 m x tan 2° = 4,54 m), d.h. statt des vorausfahrenden Fahrzeuges wird die benachbarte Fahrspur erfaßt, was zu einem zu schnellen und zu nahem Auffahren auf das voranfahrende Fahrzeug führen kann. Insofern ist eine Kalibrierung und Einstellung derartiger Fahrerassistenzsysteme, teilweise auch eine Nivellierung, unbedingt erforderlich.

Nach komplett erfolgter Montage (inki. Reifen und Räder) werden Kraftfahrzeuge derzeit unter Nutzung des fahrzeugeigenen Antriebes auf sogenannte Multifunktions-Rollenprüfstände gefahren, um insbesondere sicherheitsrelevante Funktionen des Fahrzeuges zu überprüfen. Bevor das Kraftfahrzeug auf den Rollenprüfstand gefahren wird, wird auf speziellen Fahrwerkgeometriemeß- und Einstellständen (FWS) das Fahrwerk eingestellt. Dies umfaßt die Messung und Einstellung der Spur und des Sturzes jedes Rades und somit auch jeder Achse. Zudem wird der sogenannte Höhenstand des Fahrzeugkarosserie ermittelt. Somit ist die Lage der Karosserie im Koordinatensystem des Fahrwerkgeometrie- und Einstellstandes genau bekannt. Die exakte oder tatsächliche Fahrtrichtung des Kraftfahrzeuges errechnet sich ferner aus der Mittelung der Spurwerte der beiden Räder der Hinterachse. Der Winkel zwischen der geometrischen Mittelachse der Karosserie und der tatsächlichen Fahrtrichtung wird als Dackellaufwinkel bezeichnet. Er beträgt je nach Qualität des Karosseriebaus einige Winkelminuten bis hin zu einem viertel Grad.

Parallel dazu oder direkt nach dem FWS wird das Fahrlicht, also die Hauptscheinwerfer des Kraftfahrzeuges, auf die tatsächliche Fahrtrichtung eingestellt (Azimutwinkel) und gemäß der gesetzlichen Vorschriften zur Karosserielage nivelliert (Elevationswinkel). Wichtiger, weil sicherheitskritischer (Blenden des Gegenverkehrs) ist hier die Elevationseinstellung. Dazu werden sogenannte Lichtkästen in eine definierte Position vor die Hauptscheinwerfer gefahren. Die Scheinwerfer werden dann mit speziellen Einstellschraubern ausgerichtet. Hier existieren manuelle, halbautomatische und vollautomatisierte Lösungen. Bei Kenntnis der Lage der Karosserie und der Lage der Lichtkästen im globalen Koordinatensystem des FWS kann das Fahrlicht genau auf die tatsächliche Fahrtrichtung ausgerichtet und in der Höhe eingestellt werden. Ist die Scheinwerfereinstellung nicht in den eigentlichen Fahrwerkstand integriert, so ist es somit erforderlich, die Lage der dynamischen Fahrachse im Koordinatensystem der Karosserie, also den Dackellaufwinkel, zu kennen. In einem separaten Einstellstand nach dem FWS wird die Karosserie dann noch einmal ausgemessen und die Hauptscheinwerfer können dann richtig eingestellt werden.

Bei kamera- und infrarotgestützten Assistenzsystemen, wie beispielsweise sichtverbessernden Nachtfahrassistenten (bis 300 m vor dem Fahrzeug) sowie Spurwechsel- und Spurhalteassistenten ergibt sich eine entsprechende Problematik bezüglich der Einstellung und der Kalibrierung im Bereich des Bandendes.

Um dem steigenden Einsatz solcher Systeme produktionstechnisch Rechnung zu tragen, werden zunehmend FAS-Kalibrierstände für die PKW-Produktion entwickelt, hergestellt und vertrieben.

Die EP 1 596 179 A2 offenbart einen Fahrzeugfunktionsprüfstand. Es ist offenbart, dass einzelne Teile zumindest einzelner Belastungseinrichtungen den lenkbaren Rädern derart zugeordnet und während des Prüfvorgangs bewegbar sind, dass die zumindest einzelnen Teile Lenkbewegungen folgen können. Vorteilhaft wird es dadurch möglich, Prüfvorgänge auch bei Lenkeinschlägen vornehmen zu können, die mit einer starren Belastungseinrichtung sowie mit herkömmlichen Rollenprüfständen nicht darstellbar sind.

Diese werden oft unabhängig von den erwähnten Fahrwerks- und Multifunktionsrollenprüfständen am Bandende in die bestehenden Produktionslinien eingebunden.

Aufgabe der Erfindung ist es somit, eine effiziente Vorrichtung für die Prüfung und Einstellung von Fahrerassistenzssystemen von Kraftfahrzeugen am Bandende zu schaffen.

Diese Aufgabe wird erfindungsgemäß dadurch gelöst, daß Mittel zum Fördern eines Kraftfahrzeuges in einem Gehänge vorgesehen sind, daß Mittel zum Positionieren und Fixieren des Gehängesystems vorgesehen sind, daß Mittel zum Messen der Lage des Karosserickoordinatensystems des Fahrzeuges im Koordinatensystem der Vorrichtung vorgesehen sind, daß Mittel zum Kalibrieren und Einstellen der Fahrerassistenzsysteme unter Berücksichtigung der Lage der dynamischen Fahrachse in Bezug auf das Karosseriekoordinatensystem des Kraftfahrzeuges vorgesehen sind.

Der Erfindung liegt die Überlegung zugrunde, daß die Kenntnis der genauen Position des Kalibriertargets im Prüfstand sowie der Raumlage des Fahrzeuges bzw. der Karosserie im Koordinatensystem desselben sowie die Information bezüglich der Abweichung der dynamischen Fahrachse von der geometrischen Längsachse des Kraftfahrzeuges, der sogenannte Dackellaufwinkel, auch für die Prüfung und Einstellung der Fahrerassistenzsysteme erforderlich ist und daß bei einer Förderung des Kraftfahrzeuges im Gehänge die Ermittlung der ersteren Informationen durch die Mittel zum Positionieren und Fixieren des Gehängesystems leicht ermittelbar sind und letztere Information von einem ohnehin erforderlichen Fahrwerkgeometriemeß- und -einstellstand (FWS) übernommen werden kann, so daß eine Neubestimmung dieses Wertes ganz entfallen kann. Auf diese Weise kann eine schnelle und zuverlässige Kalibrierung aller Fahrerassistenzsysteme in einem vollautomatisierten FAS-Einstellstand erfolgen.

Die von vielen Automobilherstellern angestrebte Vollautomatisierung von Prüfumfängen im Bereich des Bandendes kann auf diese Weise wirkungsvoll realisiert werden. Neben dem Vorteil eines geordneten, hochstrukturierten und zeitoptimierten Prüf- und Einstellprozeß kämen weitere Vorteile bezüglich der Prozeßgestaltung hinzu:

Hierbei ist es vorteilhaft, daß die Mittel zum Fördern des Kraftfahrzeuges in dem Gehänge als Mittel zum Aufnehmen der Achsenden eines Kraftfahrzeuges ausgebildet sind, die das Eigengewicht des Kraftfahrzeuges tragen.

Der FAS Prüf- und Einstellstand kann sich an einen FWS, in denen das Fahrzeug ohne Reifen und Räder vermessen und eingestellt wird, in idealer Weise anschließen, wobei die Fahrzeuge im Gehänge gefördert werden. Dies ermöglicht eine völlig autonome Förderung der Fahrzeuge durch die gesamte Produktion und insbesondere auch durch die anschließenden Einstell- und Prüfstände. Auch in Hinblick auf die Prozeßsicherheit ist eine derartige Vorgehensweise von großem Vorteil.

Eine Weiterbildung der Erfindung besteht darin, daß die Mittel zum Fördern des Kraftfahrzeuges in dem Gehänge eine Variation der Transporthöhe des Fahrzeuges ermöglichen.

Befindet sich das Fahrzeug in einem in der Transporthöhe anpaßbaren Hängefördersystem, beispielsweise einem Hubgehänge, so können Kalibriertargets und andere benötigte Komponenten zum Einstellen von FAS bodengeführt optimal zur Position des Fahrzeuges ausgestaltet werden. Beispielsweise würden auf dem Hallenboden anzubringende Targets zur Kalibrierung von "RearView"-Systemen nicht mehr durch das Fahrzeug überfahren werden und könnten somit kostengünstiger ausgelegt werden. Andere Targets müßten nicht mehr in den Prüfstand "eingeschwenkt" werden. Der Positionieraufwand für das Fahrzeug wäre zudem viel geringer, da das Hängesystem einfach auf definierte Absteckpins abgelassen werden könnte und somit das Fahrzeug bereits optimal positioniert wäre.

Der Aufwand für die Positionierung des Fahrzeuges wäre zudem viel geringer, da das Hängesystem einfach auf definierte Absteckpins abgelassen werden könnte und somit das Fahrzeug bereits optimal positioniert wäre. Der zusätzliche Aufwand, um das Fahrzeug möglichst genau durch einen Werker in einen FAS-Prüfstand einzufahren, um es gemäß der Erfassungsgrenzen der Höhenstandslaser zu positionieren, entfällt dadurch. Der maximale notwendige Meßbereich wird dadurch kleiner. Somit kann die Messung genauer und schneller erfolgen. Zudem wird das Fahrzeug im Grehüngesystem so abgelassen, daß alle notwendigen Freiheitsgrade des Fahrzeuges gewährleistet sind.

Es ist zweckmäßig, daß Mittel zum Übertragen der Lage der dynamischen Fahrachse in Bezug auf das Karosseriekoordinatensystem des Kraftfahrzeuges von einem vorgelagerten Fahrzeuggeometriestand in die Vorrichtung vorgesehen sind.

Es ist sowohl denkbar, in den FWS-Stand die Prüfung der FAS zu integrieren. Bevorzugt wird jedoch eine Anordnung eines FAS-Prüf- und Einstellstandes direkt im Anschluß an den FWS, in den dann die obengenannten im FWS ermittelten Daten übertragen werden können.

Eine Ausbildung der Erfindung ist dadurch gekennzeichnet, daß auch Mittel zum Prüfen, Einstellen und Nivellieren der Fahrzeugleuchten, insbesondere der Fahrzeugscheinwerfer und -nebelscheinwerfer, vorgesehen sind.

Es bietet sich an, diese Vorgänge in den FAS-Prüf und Einstellstand zu integrieren.

Weiterhin ist vorgesehen, daß vor, hinter oder neben dem Kraftfahrzeug angeordnete optische, akustische, thermische Kalibrierzierle und Kalibrierziele für Radar vorgesehen sind.

In diesem Zusammenhang liegt es im Rahmen der Erfindung, daß die Kalibrierziele Targets für Abstandhaltesysteme, Kalibrierplatten für Kamerasysteme, insbesondere Rückfahrkameras, Rundumsichtkameras sowie Nachtsichtassistenzsysteme, und/oder radargestützte Dopplergeneratoren für Spurwechselassistenzsysteme sind.

Ebenfalls ist zur Erfindung gehörig, daß die Kalibrierziele positionierbar, insbesondere verfahrbar und/oder verschwenkbar sind.

Die jeweilige Position der Kalibrierziele muß im Koordinatensystem des FAS Prüf- und Einstellstandes hochgenau bekannt sein,

Vorteilhaft ist weiterhin, daß das Kraftfahrzeug über das Gehänge mit elektrischem Strom versorgbar ist.

Schließlich ist es auch zweckmäßig, daß in das Gehänge die Mittel zur Datenübermittlung in die Vorrichtung für die Prüfung und Einstellung von Fahrerassistenzssystemen und von dieser zu anderen Systemen integriert sind.

Nachfolgend wird ein Ausführungsbeispiel der Erfindung anhand einer Zeichnung erläutert.

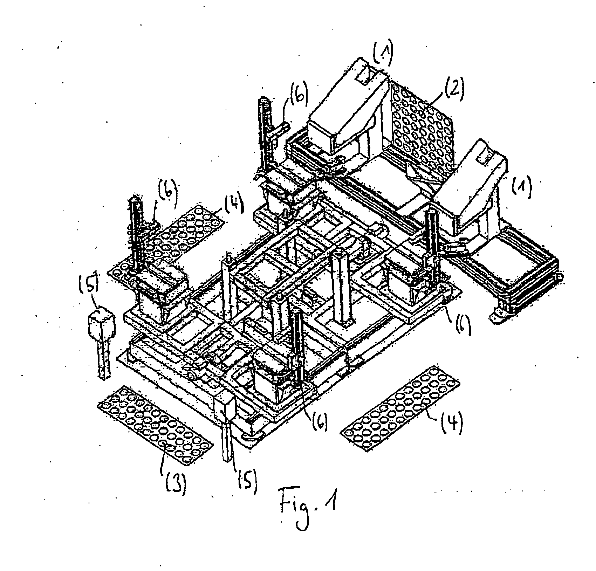

Es zeigen
- Fig. 1: einen erfindungsgemäßen FAS-Prüf- und Einstellstand,
- Fig. 2: eine Darstellung eines Nullpunktspanners und einer Adapterscheibe zur Verbindung des Fahrzeuges mit den Prüf- und Einstellständen.

In den erfindungsgemäßen FAS Prüf- und Einstellstand wird das Kraftfahrzeug in einem Hubgehänge gefördert und dann durch das Hubgehänge auf Absteckpins mit definierter Position abgelassen, so daß es bereits optimal positioniert ist, Aus einem vorgeschalteten FWS ist bereits die Information bezüglich der Abweichung der dynamischen Fahrachse von der geometrischen Längsachse des Fahrzeuges, der Dackcllaufwinkel, bekannt.

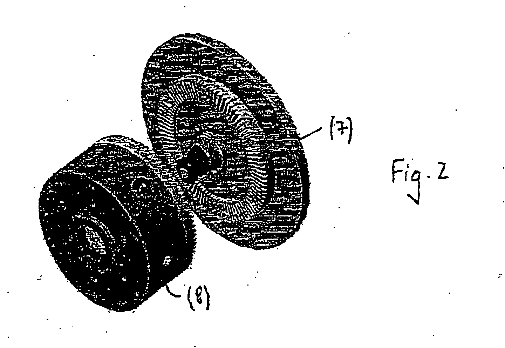

Das Kraftfahrzeug wird vorzugsweise ohne Räder und Reifen in den FAS Prüf- und Einstellstand eingefördert, wobei statt dieser vier Adapterscheiben (7), von denen eine in Fig. 2 zusammen mit dem dazugehörigen Nullpunktspanncr (8) dargestellt ist, über eine Radverschraubung direkt an die Radflansche des Fahrzeuges geschraubt sind. Die Adapterscheiben (7) dienen als Meßfläche für den FAS Prüf- und Einstellstand. Dort wird sie über spezielle Prismen aufgenommen, die auf Schwimmplatten montiert sind. Damit steht das Fahrzeug auf optimale Weise kräftefrei im Stand. Die Differenz zwischen den Durchmessern der Adapterscheibe und den anschließend am Fahrzeug montierten Rädern kann rechnerisch leicht ausgeglichen werden.

Die Montage der Adapterscheibe (7) kann wahlweise manuell durch einen Werker, halbautomatisch mit sogenannten Handlinggeräten oder vollautomatisiert mit Hilfe von Robotern geschehen. Auf dieser Adapterscheibe kann eine exakt bearbeitete Meßfläche von einem System aus drei Punktlasern abgetastet werden. Die Messung über die Oberfläche der Adapterscheibe als Ebene im Raum kann schneller erfolgen und ist weniger aufwendig als herkömmliche Verfahren.

Der eigentliche FAS Prüf- und Einstellstand weist zwei Lichtkästen (1) für die Haupt- und Nebelscheinwerfer des Fahrzeugs auf. Weiterhin sind Targets für ACC-Systeme und Nachtsichtsystemc, mit Targets für kameragestützte Assistenzsysteme wie LDW (2), Rückfahrkameras (3) und in die Außenspiegel des Fahrzeuges integrierte Kamerasysteme zur Rundumsicht (4) sowie radargestützte Dopplergeneratoren für Spurwechselassistcnten (5) vorgesehen.

In dem FAS Prüf- und Einstellstand wird mittels eines Lasers (6) pro Radhaus noch einmal die Raumlage der Karosserie gemessen. Mit der im vorgeschalteten FWS-Fahrwerkstand ermittelten Winkelbeziehung zwischen der Symmetrieachse der Karosserie und der exakten Fahrrichtung, dem Dackellaufwinkel, der aus dem FWS-Fahrwerkstand übermittelt werden kann, kann nun das ACC-System ausreichend genau eingemessen werden.

Während der eigentlichen Prüfung und Einstellung der FAS werden dem Fahrzeug von dem Prüfstand Daten vorgespiegelt, die in der Realität von den Sensoren erfaßt werden, aber die auf dem Prüfstand aufgrund der fehlenden Dynamik des Fahrzeuges nicht vorliegen. Diese Daten müssen entsprechend dem Prüfablauf zum richtigen Zeitpunkt an die richtigen Sensoren bzw. an deren Steuerelemente oder aber deren Steuerungssoftwaremodule gesendet werden.

Der eigentliche Einstellvorgang der verschiedenen FAS kann vollautomatisch erfolgen, z.B. über kameragesteuerte Schraubroboter, bzw, kann bei lediglich auf Softwarebasis einstellbaren FAS die Einstellung durch entsprechende Softawarekonfiguration erfolgen.

Schließlich ist es zweckmäßig, daß die Bestromung und die Kommunikation mit dem Fahrzeug über die Gehängestruktur erfolgt.

## Patentansprüche

1. Vorrichtung für die Prüfung und Einstellung von Fahrerassistenzsystemen von Kraftfahrzeugen am Bandende, **dadurch gekennzeichnet, daß** Mittel zum Fördern eines Kraftfahrzeuges in einem Gehänge vorgesehen sind, daß Mittel zum Positionieren und Fixieren des Gehängesystems vorgesehen sind, daß Mittel (6) zum Messen der Lage des Karosseriekoordinatensystems des Fahrzeuges im Koordinatensystem der Vorrichtung vorgesehen sind, daß Mittel (2, 3, 4, 5) zum Kalibrieren und Einstellen der Fahrerassistenzsysteme unter Berücksichtigung der Lage der dynamischen Fahrachse in Bezug auf das Karosseriekoordinatensystem des Kraftfahrzeuges vorgesehen sind.

2. Vorrichtung gemäß Anspruch 1, **dadurch gekennzeichnet, daß** die Mittel zum Fördern des Kraftfahrzeuges in dem Gehänge als Mittel (7, 8) zum Aufnehmen der Achsenden eines Kraftfahrzeuges ausgebildet sind, die das Eigengewicht des Kraftfahrzeuges tragen.

3. Vorrichtung gemäß Anspruch 1, **dadurch gekennzeichnet, daß** die Mittel zum Fördern des Kraftfahrzeuges in dem Gehänge eine Variation der Transporthöhe des Fahrzeuges ermöglichen.

4. Vorrichtung gemäß Anspruch 1, **dadurch gekennzeichnet, daß** Mittel zum Übertragen der Lage der dynamischen Fahrachse in Bezug auf das Karosseriekoordinatensystem des Kraftfahrzeuges von einem vorgelagerten Fahrzeuggeometriestand in die Vorrichtung vorgesehen sind.

5. Vorrichtung gemäß Anspruch 1, **dadurch gekennzeichnet, daß** auch Mittel (1) zum Prüfen, Einstellen und Nivellieren der Fahrzeugleuchten, insbesondere der Fahrzeugscheinwerfer und -nebelscheinwerfer, vorgesehen sind.

6. Vorrichtung gemäß Anspruch 1, **dadurch gekennzeichnet, daß** vor, hinter oder neben dem Kraftfahrzeug angeordnete optische, akustische, thermische Kalibrierziele (2, 3, 4, 5) und Kalibrierziele für Radar vorgesehen sind,

7. Vorrichtung gemäß Anspruch 6, **dadurch gekennzeichnet, daß** die Kalibrierziele (2, 3, 4, 5) Targets für Abstandhaltesysteme, Kalibrierplatten für Kamerasysteme, insbesondere Rückfahrkameras, Rundumsichtkameras sowie Nachtsichtassistenzsysteme, und/oder radargestützte Dopplergeneratoren für Spurwechselassistenzsysteme sind.

8. Vorrichtung gemäß Anspruch 6, **dadurch gekennzeichnet, daß** die Kalibrierziele (2, 3, 4, 5) positionierbar, insbesondere verfahrbar und/oder verschwenkbar sind.

9. Vorrichtung gemäß Anspruch 1, **dadurch gekennzeichnet, daß** das Kraftfahrzeug über das Gehänge mit elektrischem Strom versorgbar ist.

10. Vorrichtung gemäß Anspruch 1, **dadurch gekennzeichnet, daß** in das Gehänge die Mittel zur Datenübermittlung in die Vorrichtung für die Prüfung und Einstellung von Fahrerassistenzssystemen und von dieser zu anderen Systemen integriert sind.

## Claims

1. Device for the end-of-line testing and setting of driver assistance systems in motor vehicles, **characterised in that** means for conveying a motor vehicle in a hanger are provided, that means for positioning and anchoring the hanger system are provided, that means (6) for measuring the position of the vehicle's body coordinate system in the coordinate system of the device are provided, and that means (2, 3, 4, 5) for calibrating and setting the driver assistance systems in consideration of the position of the dynamic travel axis, relative to the motor vehicle's body coordinate system, are provided.

2. Device according to claim 1, **characterised in that** the means for conveying the motor vehicle in the hanger are engineered as (7, 8) for accommodating the ends of a motor vehicle's axles, which carry the unladen weight of the motor vehicle.

3. Device according to claim 1, **characterised in that** the means for conveying the motor vehicle in the hanger enable the height at which the vehicle is transported to be varied.

4. Device according to claim 1, **characterised in that** means are provided for transmitting the position of the dynamic travel axis, relative to the motor vehicle's body coordinate system, from a preceding wheel alignment rig to the device.

5. Device according to claim 1, **characterised by** the additional provision of means (1) for the testing, setting and levelling of vehicle lights, in particular of vehicle headlights and front fog lights.

6. Device according to claim 1, **characterised in that** optical, acoustic, thermal and radar calibration targets (2, 3 4, 5) are provided in front of, behind or beside the motor vehicle.

7. Device according to claim 6, **characterised in that** the calibration targets (2, 3, 4, 5) are targets for spacing-maintenance systems, calibration plates for camera systems, in particular rear-view cameras, all-round-view cameras and night-vision cameras, and/or radar-assisted Doppler generators for lane-change assistance systems.

8. Device according to claim 6, **characterised in that** the calibration targets (2, 3, 4, 5) are positionable, in particular movable and/or slewable.

9. Device according to claim 1, **characterised in that** the motor vehicle can be supplied with electric current via the hanger.

10. Device according to claim 1, **characterised in that** the means for transmitting data to the device for the testing and setting of driver assistance systems, and from this to other systems, are integrated in the hanger.

## Revendications

1. Dispositif pour le contrôle et le réglage en bout de chaine de systèmes d'assistance à la conduite de véhicules automobiles, **caractérisé en ce que** des moyens sont prévus pour transporter un véhicule automobile dans un dispositif de suspension, **en ce que** des moyens sont prévus pour positionner et fixer le système de suspension, **en ce que** des moyens (6) sont prévus pour mesurer la position du système de coordonnées de la carrosserie du véhicule dans le système de coordonnées du dispositif, **en ce que** des moyens (2, 3, 4, 5) sont prévus pour étalonner et régler les systèmes d'assistance à la conduite en tenant compte de la position de l'axe de conduite dynamique par rapport au système de coordonnées de la carrosserie du véhicule automobile.

2. Dispositif selon la revendication 1, **caractérisé en ce que** les moyens pour transporter le véhicule automobile dans le dispositif de suspension sont conçus comme des moyens (7, 8) pour recevoir les extrémités des axes d'un véhicule automobile et portent le poids propre du véhicule automobile.

3. Dispositif selon la revendication 1, **caractérisé en ce que** les moyens pour transporter le véhicule automobile dans le dispositif de suspension permettent une variation de la hauteur de transport du véhicule.

4. Dispositif selon la revendication 1, **caractérisé en ce que** des moyens sont prévus dans le dispositif pour transmettre la position de l'axe de conduite dynamique par rapport au système de coordonnées de la carrosserie du véhicule automobile, laquelle position provient d'un stand de mesure de géométrie du véhicule situé en amont.

5. Dispositif selon la revendication 1, **caractérisé en ce que** des moyens (1) sont également prévu pour contrôler, régler et mettre de niveau les feux du véhicule, en particulier les phares et des phares antibrouillard du véhicule.

6. Dispositif selon la revendication 1, **caractérisé en ce que** des cibles d'étalonnage optiques, acoustiques ou thermiques (2, 3, 4, 5) et des cibles d'étalonnage pour radar sont prévues, disposées devant, derrière ou à côté du véhicule automobile.

7. Dispositif selon la revendication 6, **caractérisé en ce que** les cibles d'étalonnage (2, 3, 4, 5) sont des cibles pour des systèmes de conservation des
distances, des plaques d'étalonnage pour des systèmes de caméra, en particulier pour caméras de recul, pour caméras à vue panoramique et pour systèmes de vision nocturne, et/ou des générateurs Doppler assistés par radar pour des systèmes d'assistance au changement de voie.

8. Dispositif selon la revendication 6, **caractérisé en ce que** les cibles d'étalonnage (2, 3, 4, 5) peuvent être positionnées, en particulier peuvent être déplacées et/ou peuvent être pivotées.

9. Dispositif selon la revendication 1, **caractérisé en ce que** le véhicule automobile peut être alimenté en courant électrique par l'intermédiaire du dispositif de suspension.

10. Dispositif selon la revendication 1, **caractérisé en ce que** les moyens pour transmettre des données au dispositif pour le contrôle et le réglage de systèmes d'assistance à la conduite et depuis celui-ci vers d'autres systèmes sont intégrés dans le dispositif de suspension.
